# EUROPEAN PATENT APPLICATION

(11) **EP 0 908 688 A2**
(43) Date of publication of application: **14.04.1999**
(21) Application number: 98203377.1
(22) Date of filing: 07.10.1998
(51) Int. Cl.: F25B 29/00, F25B 49/02, C09K 5/00

(54) **A refrigeration plant**

(30) Priority: 07.10.1997 IT PD970221
(71) Applicant: COSTAN S.P.A., I-32020 Limana(Belluno) (IT)
(72) Inventor: Marsiletti, Carlo Alberto, 33170 Pordenone (IT)
(74) Representative: Cantaluppi, Stefano

(57) **Abstract**

A refrigeration plant comprises a plurality of transcritical reverse Rankine-cycle refrigeration units (A1, A2, ....An) and a hydraulic circuit (10) for cooling the exchangers of the refrigeration units which cool the compressed refrigerant gas.

## Description

The subject of the present invention is a refrigeration plant designed particularly but not exclusively for refrigerating supermarket display units.

According to a first known solution for plant in the technical field of the invention, the refrigerant-fluid evaporators associated with the refrigerated display units are connected to a refrigeration unit (comprising one or more refrigerant-fluid compressors and respective condensers) disposed in an area (a machine room) separate from that in which the display units are located so as to avoid discharging the heat of the condensation of the refrigerant fluid at high pressure into the environment in which the evaporators are located. However, this means that the connection between the evaporators of the refrigerated display units and the machine room is formed with pipes of relatively large diameter containing refrigerant at high pressure, involves large quantities of fluid circulating in the pipes, and requires skilled labour for installing the plant and making the necessary connections.

Solutions involving plant in which the heat of condensation of units installed in the vicinity of the evaporators is collected and removed by means of a hydraulic circuit in order to be given up to the outside air with dry exchange or an evaporation tower are also known.

The second method indicated above involves the need to provide, in the refrigerated display units, relatively large flow-rates of water the movement of which in turn leads to the use of pipes of relatively large diameter since the jump in temperature which can be used is very low (5°K) if excessively high condensation temperatures are to be avoided. High flow-rates of water in turn lead to the need for a fairly large pumping system with related running and initial installation costs, to the need for a large water/air exchanger, or to the need to use evaporation towers with high flow-rates for cooling the water in circulation. Moreover, the energy given up by the refrigeration system cannot be recovered economically in plants of either of the known types discussed above, since the temperature level is too low (about 40°C) and, in the first case, it is economically advantageous to recover only the small portion of thermal energy given up by the refrigerant during the de-superheating stage which precedes condensation.

The present invention tackles the technical problem of providing a refrigeration plant which is designed structurally and functionally to prevent the problems complained of with reference to the prior art mentioned. A main object of the invention is to provide a plant which enables a respective refrigeration unit to be located in each refrigerated display unit so as to avoid the need for long connections between the refrigeration unit and the evaporators and the consequent problems mentioned above with reference to the first example of known technology, without at the same time leading to the need for high flow-rates of water for cooling the condensation systems.

A further object of the invention is to develop a plant in which the water necessary for cooling the refrigerant fluid is made available to the recovery system at temperatures high enough for economically advantageous re-use thereof. At the same time, it is proposed, according to the invention, to achieve this cooling of the refrigerant fluid with low flow-rates of water.

This problem and these objects are achieved by the invention by a plant formed in accordance with the following claims.

The innovative concept upon which the present invention is based is that the refrigeration units provided (including the respective exchangers for giving up heat at high pressure) can be installed in, or in the vicinity of, each display unit in which the heat given up by the system (the heat taken from the display unit in addition to the electrical power used for compression) is discharged to a hydraulic circuit, and that the refrigeration systems use a transcritical cycle so that it is possible to have a very large temperature difference (typically 50°K) between the supply and return of the hydraulic circuit connected to the exchanger, and consequently a very low flow-rate of water (or other cooling fluid) and hence small pipe sections and low pumping power.

In addition, water (or refrigerant fluid) is made available at high temperature (65-70°C) and can therefore advantageously be used for heating water for hygiene uses and for space heating without introducing any penalty to the efficiency of the system.

The excess heat is discharged to the outside environment by means of a suitable exchange and an auxiliary cooler may be used. The stage of giving-up heat to the environment may also be split up further with the use of the most advantageous solution for each stage.

Purely by way of example, with the use of a transcritical CO₂ cycle, and upon the assumption that the outside temperature is of the order of about 30°C and the relative humidity is of the order of 60% (and hence with a wet-bulb temperature of about 24°C) it is possible to give up heat from the cooling-water circuit, if heat is not required by the recovery system, in the following manner:
- from 70°C to 35°C to the outside air with dry exchange,
- from 35°C to 27°C to the outside air with evaporative exchange,
- from 27°C to 20°C by means of the auxiliary cooling circuit.

The consumption of water during the evaporative exchange stage (evaporation towers) is very low, and is equal to about 15% of the consumption for removing the heat of condensation of an equivalent conventional system.

It should be noted that, taking account of the diurnal and seasonal variations in the outside air temperature, it is possible to reduce the use of the auxiliary cooler to a few hours per year and the effect of the energy consumption of this cooler is thus low in comparison with the total. In temperate climates it is even lower and, in cold climates, lower still.

Further characteristics and advantages of the invention will become clearer from the following detailed description of a preferred embodiment thereof, described by way of nonlimiting example with reference to the appended drawings, in which:
Figure 1 is a schematic graph of a refrigeration cycle used in the plant of the invention,
Figure 2 is a diagram of a plant formed in accordance with the present invention,
Figures 3 and 4 are diagrams of respective details of the plant of Figure 2,
Figure 5 is a schematic view showing a further detail of Figure 4 in section.

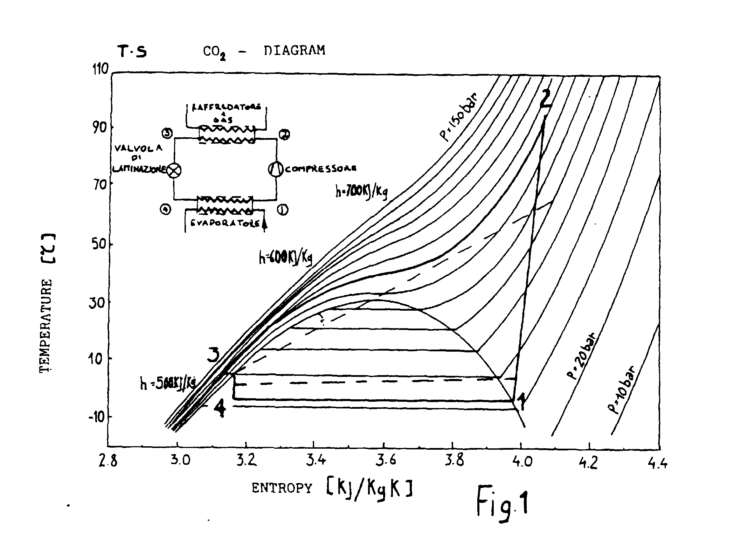

Figure 1 is a graph of temperature (T) and entropy (S) coordinates relating to carbon dioxide, in which the limit curve is indicated (L) and a typical transcritical or hypercritical reverse Rankine thermodynamic cycle is represented by the reference numerals 1, 2, 3 and 4.

The cycle comprises a substantially isoentropic compression stage 1-2 with a temperature rise up to the ordinate value 2, a cooling stage 2-3 performed outside the limit curve, an expansion stage 3-4 in which there is a reduction in pressure and a partial condensation of the fluid, and an evaporation stage 4-1 in which the refrigerant fluid absorbs heat from the surrounding environment which is consequently cooled. It will be noted that the cooling stage 2-3 takes place with a relatively large jump in temperature, particularly when compared with conventional vapour-compression refrigeration cycles. In the plant of the invention, it is proposed, in particular, to use a transcritical cycle using carbon dioxide as the refrigerant fluid. This fluid, the low polluting characteristics and non-toxicity of which are well known, is suitable for performing a transcritical refrigeration cycle in the operative conditions provided for by the invention.

This is because the critical temperature is low (31.06°C) and the pressure ratios, in the operative conditions of the plant of the invention, are similar to - and generally lower than - those normally used in conventional vapour-compression systems.

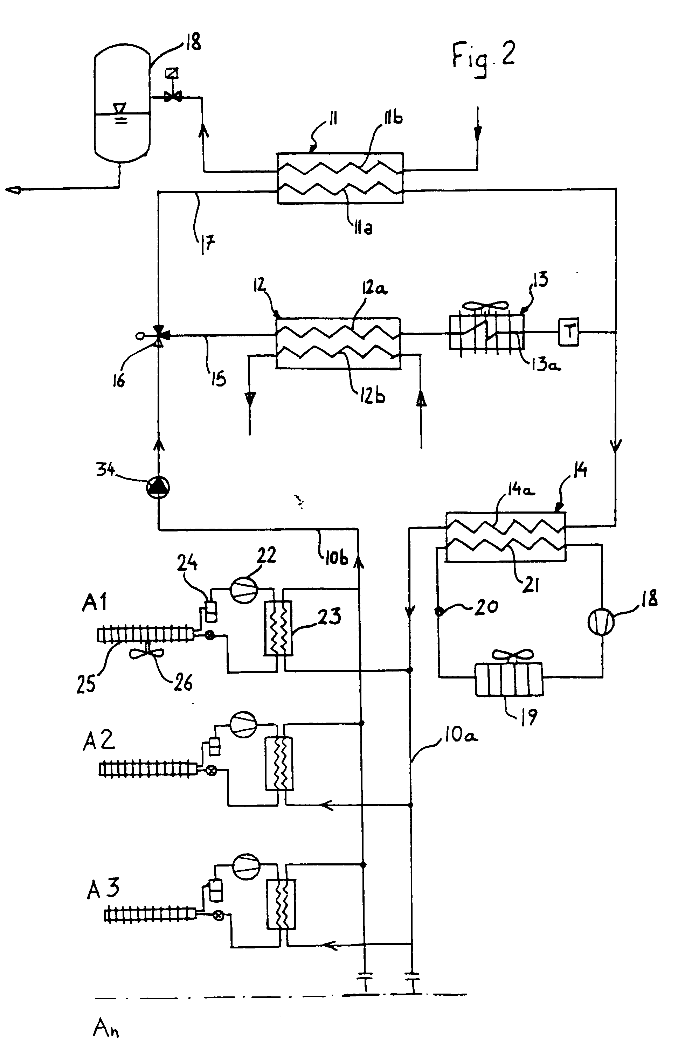

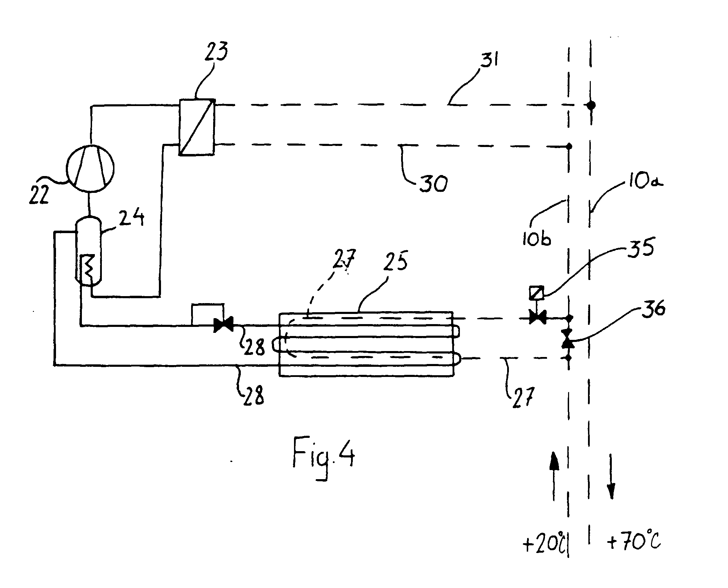

With reference to Figures 2-5, a plant formed in accordance with the present invention and intended, typically, to be located in a supermarket, comprises one or more refrigerated display units with which a plurality of refrigeration units A1, A2, A3...An are associated for cooling the display units and the products contained therein.

The refrigeration units A1, A2, ...An are connected in parallel with one another to a cooling circuit 10, the supply and return branches of which are indicated 10a and 10b, respectively.

A cooling fluid such as water, possibly with the addition of anti-freeze, is circulated in this circuit.

The cooling circuit 10 also has four heat exchangers indicated 11, 12, 13 and 14, respectively, having primary circuits 11a, 12a, 13a, 14a connected to the circuit 10 in the manner explained below.

The primary circuits 12a and 13a are connected in series with one another, and possibly with a small evaporation tower T in a first branch 15 of the circuit 10 which is connected selectively between the supply and return branches 10a, 10b by means of a three-way valve 16. The primary circuit 11a is disposed in a second branch 17 of the circuit 10 arranged in parallel with the first branch 15 and also connected selectively between the branches 10a, and 10b by means of the same three-way valve 16. The primary circuit 14a is connected to the supply branch 10a in series with the branches 15 and 17 and is connected thermally to an auxiliary refrigeration circuit which comprises, in known manner, a compressor 18, a condenser 19, an expansion valve 20 and an evaporator 21 which constitute the secondary circuit of the exchanger 14 and are consequently arranged for exchanging heat with the cooling circuit 10.

The exchangers 11 and 12 are of the water/water counterflow type. The exchanger 13 is of the water/air type and may have the evaporative cooler (T) downstream.

The exchanger 11 has a secondary circuit 11b in which water, which can be collected in a tank 18 for hygiene uses, is circulated in the manner explained below.

The exchanger 12 has a secondary circuit 12b in which water usable for heating the supermarket premises as and when required is circulated. The residual heat is dissipated to the exterior by means of the exchanger 13 and any excess (if the outside air temperature is not low enough to permit cooling to the desired temperature) is dissipated in the auxiliary cooler 14.

The latter, as indicated above, is used for dissipating a very minor fraction of the total heat and may be shared by other users for different purposes.

All of the refrigeration units A1, A2, ...An are similar and only the unit A1 will therefore be described in greater detail.

This unit comprises a compressor 22, a water/gas heat exchanger 23 for cooling the compressed gas, a low-pressure liquid container 24, and an evaporator 25. In the liquid container 24, there is an exchanger 24a for cooling the gas coming from the exchanger 23 by thermal contact with the excess liquid coming from the evaporator 25. The latter preferably has a forced ventilation system 26 and a defrosting circuit 27.

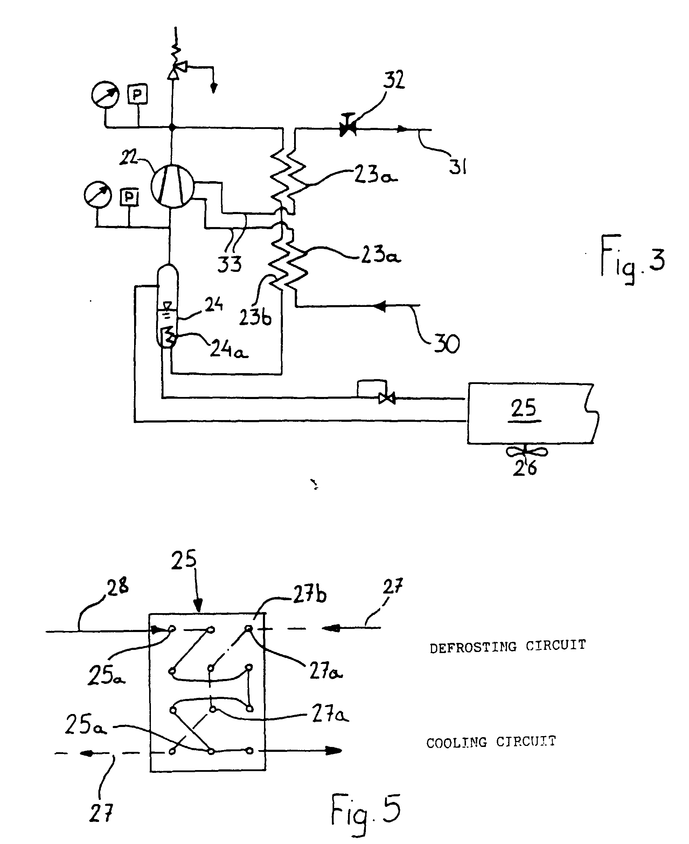

The water/gas heat exchanger 23 has a primary circuit 23a and a secondary circuit 23b connected for exchanging heat with one another. The primary circuit 23a is connected to the supply branch 10a of the cooling circuit 10 by means of a first pipe 30, and is connected to the return branch 10b by means of a second pipe 31 having a regulation valve 32. The gas compressed by the compressor 22 is circulated in the circuit 23b. The electric motor of the compressor 22 is preferably cooled to a temperature between that of the water entering the primary circuit of the exchanger 23 and that of the water discharged therefrom. The motor can thus be cooled to the maximum temperature permitted, the cold water input to the exchanger 23 being kept for cooling the high-pressure gas to the lowest possible temperature, thus maximizing the efficiency of the refrigeration system. With reference to Figure 3, the motor is cooled by means of a tapping circuit 33 branching from the primary circuit 23a of the exchanger 23.

The defrosting circuit 27 is connected to the return branch 10b (or to the supply branch if it is preferable to restrict heat levels) of the circuit 10 and comprises a plurality of pipes 27a incorporated at predetermined intervals in the same finned block 27b of the evaporator 25 in which the pipes 25a of the circuit 28 for the circulation of the refrigerant fluid are housed. On/off and regulation valves 35, 36 are provided for the operative control of the defrosting circuit 27.

The plant operates as follows.

The primary circuits 23a of the exchangers 23 are supplied with cold water at 15-20°C which is heated upon discharge to 65-70°C as a result of the exchange of heat with the refrigerant fluid, compressed to supercritical pressure, which is thus cooled. The refrigeration unit operates in accordance with the cycle of Figure 1.

The water is kept in circulation by a pump 34 and is sent to the heat-dissipation exchangers 11-14 in the following ways.

If water from the tank 18 is required for hygiene uses and is thus replaced by water drawn from the water mains at low temperature (10-15°C), which can cool the flow circulating in the cooling circuit 10 to the desired value, the three-way valve 16 is operated so as to open the branch 17 so that the cooling water circulates in the primary circuit 11a of the exchanger 11.

If no water is drawn for hygiene uses, the three-way valve 16 is switched so as to open the branch 15 so that the circulation of cooling water is directed through the exchangers 12 and 13 so as to supply hot water for heating the supermarket, or solely through the exchanger 13 if water is not used for hygiene uses and no heat is to be recovered for the above-mentioned heating. If the ambient temperature is too high advantageously to dissipate all of the above-mentioned heat, a small evaporative cooler T will further cool the water of the circuit 10.

Finally, the auxiliary cooler 14, disposed downstream of both branches 15, 17, dissipates the further residual heat of the cooling water to achieve the temperature considered optimal for the purposes of the efficiency of the refrigeration plant.

With suitable amounts of washing water stored in the tank 18 and with the use of suitable criteria for controlling the heat-recovery systems indicated above, it is possible to optimize the operation of the plant described. For example, it is possible to concentrate the heating of the water required for hygiene uses during the hottest period of the day and to make use of cooler periods for the dissipation of heat to the outside air.

The flow-rate of cooling water depends on the permitted temperature jump as well as on the thermal power involved.

Typically, the temperature jump on the water side of an equivalent plant with units operating in a subcritical cycle is 5°K.

In the case of the invention, the temperature jump is of the order of 50°K. The flow-rate is therefore equal to about one tenth of that in the previous case.

By way of example, a plant having a thermal power of 140 kW to be dissipated will have a flow-rate of 24 cu.m./h and 2.4 cu.m./h in the two cases, respectively. The pipes of the main circuit will have diameters of 90 mm in the first case and 30 mm in the second. The pumping power will be 2500 W in the first case and 250 W in the second.

The plant thus solves the problem set, achieving the objects indicated.

## Claims

1. A refrigeration plant including at least one refrigeration unit (A1, A2,....An) operative in accordance with a full refrigeration cycle and comprising a heat exchanger (23) for cooling a compressed refrigerant fluid, characterized in that the refrigeration cycle performed by each refrigeration unit is a transcritical cycle, and in that the plant comprises a hydraulic circuit (10) for cooling the exchanger (23).

2. A plant according to Claim 1, in which the fluid circulating in the hydraulic cooling circuit (10) is water.

3. A plant according to Claim 1 or Claim 2, in which the refrigerant fluid is carbon dioxide.

4. A plant according to Claim 2, in which the hydraulic circuit (10) for cooling the exchanger of each refrigeration unit comprises a first exchanger (11) for heating the secondary cooling water to a first temperature, for example, for hygiene uses, and at least one second exchanger (12) arranged in parallel with the first.

5. A plant according to Claim 3, in which one of the exchangers, preferably the second exchanger (12), has a second circuit (12b) associated with a heating plant.

6. A plant according to Claim 3 or Claim 4, in which the hydraulic cooling circuit (10) of the exchanger (23) of each refrigeration unit comprises a third exchanger (13), the secondary circuit of which comprises means for dissipating heat to the outside environment.

7. A plant according to Claim 6, in which the hydraulic cooling circuit (10) comprises a fourth (14), evaporation-tower exchanger.

8. A plant according to Claim 6 or Claim 7, in which the hydraulic cooling circuit (10) comprises an auxiliary cooler.

9. A plant according to one or more of the preceding claims, in which each refrigeration unit comprises a compressor (22), a water/gas heat exchanger (23) for cooling the compressed gas, and an evaporator (25).

10. A plant according to Claim 9, in which a low-pressure liquid container (24) is interposed between the intake of the compressor (22) and the output of the evaporator (25), the liquid container being connected in heat-exchange contact with an exchanger for cooling the gas coming from the water/gas exchanger (23) by thermal contact with the excess liquid coming from the evaporator (25).

11. A plant according to Claim 9, in which the compressor (22) is cooled, by a tapping circuit (33) branching from a primary circuit (23a) on the water side of the water/gas heat exchanger (23), to a temperature between that of the water entering the primary circuit (23a) and that of the water leaving the primary circuit.

12. A plant according to Claim 9, in which the evaporator (25) is of the type with a finned block (27b) and comprises a defrosting circuit (27) connected to the hydraulic cooling circuit (10), the defrosting circuit comprising a plurality of pipes (27a) incorporated in the finned block (27b).
